# EUROPÄISCHE PATENTSCHRIFT

(11) **EP 2 009 763 B1**
(45) Veröffentlichungstag und Bekanntmachung des Hinweises auf die Patenterteilung: **24.03.2021**
(21) Anmeldenummer: 08010565.3
(22) Anmeldetag: 11.06.2008
(51) Int. Cl.: H02J 3/14, H02J 3/38, H02J 9/00

(54) **Stromversorgungsvorrichtung**
Electricity supply device
Dispositif d'alimentation en courant

(30) Priorität: 29.06.2007 DE 102007030451
(43) Veröffentlichungstag der Anmeldung: 31.12.2008
(73) Patentinhaber: SMA Solar Technology AG, 34266 Niestetal (DE)
(72) Erfinder: Köhler, Claus, 88299 Leutkirch (DE); Morent, Roland, 88239 Wangen (DE)
(74) Vertreter: Lahnor, Peter

(56) Entgegenhaltungen:
- EP-B1- 0 810 713
- WO-A1-2006/018414
- WO-A2-2006/094128
- DE-A1- 19 935 754
- DE-U1-202004 008 883
- US-A- 5 761 084
- US-A1- 2006 187 600

## Beschreibung

Die vorliegende Erfindung betrifft eine Stromversorgungsvorrichtung nach dem Oberbegriff des Anspruchs 1, und insbesondere eine Stromversorgungsvorrichtung zur Stromversorgung wenigstens eines elektrischen Verbrauchers über wahlweise eine allgemeine Stromversorgung oder eine autarke Stromversorgung zum Beispiel bei Ausfall der allgemeinen Stromversorgung. Werden kleinere Einheiten von Stromverbrauchern wie ein Haushalt, ein Gebäude, eine Firma und dergleichen bei zum Beispiel Stromausfall der allgemeinen Stromversorgung über eine autarke Stromversorgung mit Strom versorgt, spricht man von einem "Inselbetrieb". Fällt das von einem Energieversorger gespeiste Niederspannungsnetz aus, so wird der Inselbereich über Schalter vom Niederspannungsnetz getrennt und an die autarke Stromversorgung geschaltet.

Nach heutigem Stand der Technik wird als primäre Energiequelle für den Inselbetrieb häufig eine Photovoltaikanlage verwendet, die auch mit Pufferbatterien ausgerüstet sein kann, wie zum Beispiel in der DE 10 2004 037 330 A1 beschrieben.

Autarke Stromversorgungen verfügen jedoch überein begrenztes Leistungsvermögen. Aus diesem Grund können sie zusätzlich mit einem Schaltgerät ausgebildet werden, das die autarke Stromversorgung beispielsweise im Fall einer Überlastung abschaltet. Bei Photovoltaikanlagen als autarker Stromversorgung kann eine Überlastung zum Beispiel bei geringer Sonneneinstrahlung oder bei erschöpfter Pufferbatterie vorliegen. Ein portabler Inselstromerzeuger mit einem solchen Überlastungsschutz ist zum Beispiel aus der DE 20 2004 008 883 U1 bekannt.

Ferner offenbart die EP 0 810 713 B1 einen Wechselrichter, dessen Ausgangsspannung im Nulldurchgang der Sinusspannung verzerrt werden kann. Auf diese Weise ist es zum Beispiel möglich, den Inselbetrieb einer Stromversorgungsvorrichtung aus dem Spannungsverlauf des Wechselrichters der im Inselbetrieb zugeschalteten Photovoltaikanlage zu erkenner US 2006/0187600 A1 offenbart den Oberbegriff des Anspruchs 1.

Der vorliegenden Erfindung liegt die Aufgabe zugrunde, eine Stromversorgungsvorrichtung der eingangs genannten Art derart weiterzuentwickeln, dass ein verbessertes Energiemanagement im Inselbetrieb ermöglicht ist.

Diese Aufgabe wird gelöst durch eine Stromversorgungsvorrichtung mit den Merkmalen des Anspruchs 1. Vorteilhafte Ausgestaltungen und Weiterbildungen der Erfindung sind Gegenstand der abhängigen Ansprüche.

Die Stromversorgungsvorrichtung weist wenigstens einen Stromverbraucheranschluss, an den ein elektrischer Verbraucher angeschlossen werden kann; einen ersten Stromversorgungsanschluss, der mit einer allgemeinen Stromversorgung verbindbar ist; einen zweiten Stromversorgungsanschluss, der mit einer autarken Stromversorgung verbunden ist; eine Umschaltvorrichtung zum Schalten der Verbindung des wenigstens eines Stromverbraucheranschlusses mit dem ersten Stromversorgungsanschluss (Netzbetrieb) oder dem zweiten Stromversorgungsanschluss (Inselbetrieb); und die autarke Stromversorgung (P) auf. Weiter ist die Stromversorgungsvorrichtung dadurch gekennzeichnet, dass dem wenigstens einen Stromverbraucheranschluss wenigstens eine Auswerte- und Steuervorrichtung zugeordnet ist, die derart ausgebildet ist, dass sie den Inselbetrieb der Stromversorgungsvorrichtung erkennt und den wenigstens einen Stromverbraucheranschluss zumindest im Inselbetrieb in Abhängigkeit von voreingestellten Kriterien zu- oder abschaltet.

Die autarke Stromversorgung wird als eine Photovoltaikanlage eingesetzt und ist derart ausgebildet, dass sie ihre Speisespannung und/oder die Frequenz ihrer Speisespannung im Inselbetrieb verändern kann. Zum Beispiel, in einer bevorzugten Ausgestaltung, ist die Speisespannung der autarken Stromversorgung im Bereich von -15% bis +10% eines Sollwerts veränderbar, während die Frequenz ihrer Speisespannung im Bereich von -10% bis +10% eines Sollwerts veränderbar ist.

Die erfindungsgemäße Stromversorgungsvorrichtung ermöglicht auf einfache Weise das Zu- und Abschalten des wenigstens einen Stromverbraucheranschlusses nach in der wenigstens einen Auswerte- und Steuervorrichtung voreingestellten Kriterien. Als Ergebnis ist ein verbessertes Energiemanagement der Stromversorgungsvorrichtung, insbesondere der autarken Stromversorgung, im Inselbetrieb möglich, da zum Beispiel eine Überlastung der autarken Stromversorgung vermieden und ein längerer Inselbetrieb für besonders wichtige angeschlossene elektrische Verbraucher erzielt werden kann.

Diese voreingestellten Kriterien sind zum Beispiel eine dem Stromverbraucheranschluss angebotene Spannung, eine dem Stromverbraucheranschluss angebotene Frequenz, eine Zeit seit Beginn des Inselbetriebs und/oder eine Priorität eines an den Stromverbraucheranschluss angeschlossenen elektrischen Verbrauchers.

In einer bevorzugten Ausgestaltung der Erfindung sind mehrere Stromverbraucheranschlüsse vorgesehen und für jeden der mehreren Stromverbraucheranschlüsse sind eigene Kriterien voreingestellt.

In einer weiteren Ausgestaltung der Erfindung sind mehrere Stromverbraucheranschlüsse vorgesehen und jedem der mehreren Stromverbraucheranschlüsse ist eine eigene Auswerte- und Steuervorrichtung zugeordnet. Alternativ ist es aber auch möglich, den mehreren Stromverbraucheranschlüssen eine gemeinsame bzw. kombinierte Auswerte- und Steuervorrichtung zuzuordnen.

In einer noch weiteren Ausgestaltung der Erfindung ist die autarke Stromversorgung derart ausgebildet, dass sie zum Start und/oder zum Ende des Inselbetriebs ein spezielles Signal an die wenigstens eine Auswerte- und Steuervorrichtung sendet, und die wenigstens eine Auswerte- und Steuervorrichtung ist derart ausgebildet, dass sie den Inselbetrieb der Stromversorgungsvorrichtung anhand des von der autarken Stromversorgung gesendeten speziellen Signals erkennt. Dabei ist das von der autarken Stromversorgung gesendete spezielle Signal zum Beispiel eine kurzzeitige Abweichung der dem wenigstens einen Stromverbraucheranschluss angebotenen Spannung und/oder Frequenz.

Der wenigstens eine Stromverbraucheranschluss wird von der wenigstens einen Auswerte- und Steuervorrichtung während des Netzbetriebs vorzugsweise ständig zugeschaltet.

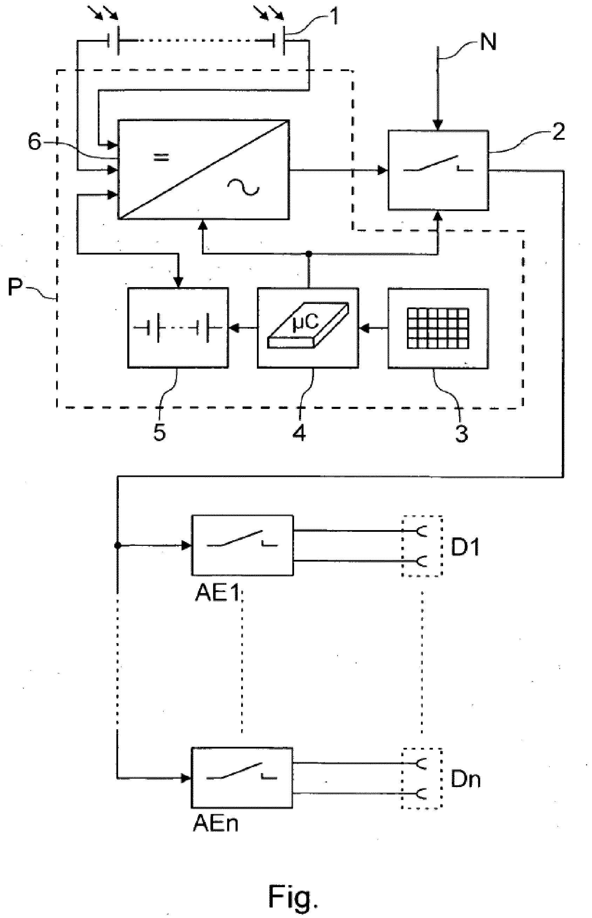

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigt die einzige Figur ein schematisches Blockschaltbild eines Ausführungsbeispiels einer Stromversorgungsvorrichtung.

Die Figur zeigt einen Netzteilbereich, der von der allgemeinen Stromversorgung N betrieben wird (Netzbetrieb) und zum Beispiel bei Netzausfall von einer Photovoltaikanlage als autarker Stromversorgung P gespeist wird (Inselbetrieb). Die elektrischen Verbraucher dieser Insel werden über Steckdosen (Stromverbraucheranschlüsse der Erfindung) D1 bis Dn von der Stromversorgungsvorrichtung mit elektrischer Energie versorgt.

Die Photovoltaikanlage P besteht in bekannter Weise im Wesentlichen aus einem Solarpanel 1, einem Programmierfeld 3, einer intelligenten Steuer- und Regeleinheit 4 mit Mikrocomputer (µC), einer Pufferbatterie 5 und einem Wechselrichter 6. Die Steckdosen D1 bis Dn sind über eine Umschaltvorrichtung 2 entweder mit einem ersten Stromversorgungsanschluss, mit dem die allgemeine Stromversorgung N verbindbar ist, oder mit einem zweiten Stromversorgungsanschluss, mit dem die Photovoltaikanlage P verbunden ist, verbunden.

Wie in der Figur dargestellt, ist jeder der Steckdosen D1 bis Dn eine Auswerte- und Steuervorrichtung AE1 bis AEn zugeordnet. Alternativ ist es auch möglich, eine gemeinsame bzw. kombinierte Auswerte- und Steuervorrichtung für alle Steckdosen D1 bis Dn zum Beispiel mit einem gemeinsamen Eingang, der mit der Umschaltvorrichtung 2 verbunden ist, und n Ausgängen, die mit den Steckdosen D1 bis Dn verbunden sind, vorzusehen.

Im normalen Netzbetrieb werden alle Steckdosen D1 bis Dn über die Umschaltvorrichtung 2 aus der allgemeinen Stromversorgung N gespeist. Die Auswerte- und Steuervorrichtungen AE1 bis AEn halten dabei die Steckdosen D1 bis Dn vorzugsweise ständig zugeschaltet, d.h. die angeschlossenen elektrischen Verbraucher werden während des Netzbetriebs fortwährend mit Strom aus der allgemeinen Stromversorgung N versorgt.

Zum Beispiel bei einem Netzausfall schaltet die Steuer- und Regeleinheit 4 der Photovoltaikanlage P auf Inselbetrieb. Die Photovoltaikanlage P übernimmt dann die Speisung der an die Steckdosen D1 bis Dn angeschlossenen elektrischen Verbraucher aus dem Solarpanel 1 und/oder ihrer Pufferbatterie 5. Zu diesem Zweck wird über die Umschaltvorrichtung 2 der erste Stromversorgungsanschluss der allgemeinen Stromversorgung N abgeschaltet und der zweite Stromversorgungsanschluss der Photovoltaikanlage P verbunden.

Zu Beginn des Inselbetriebs gibt der Wechselrichter 6 der Photovoltaikanlage P ein spezielles Signal in Form einer kurzzeitigen großen Abweichung der den Steckdosen D1 bis Dn angebotenen Spannung und/oder Frequenz aus. Die den Steckdosen D1 bis Dn zugeordneten Auswerte- und Steuervorrichtungen AE1 bis AEn sind so ausgebildet, dass sie dieses spezielle Spannungs- und/oder Frequenzsignal empfangen und auswerten können, und sie schalten dann entsprechend auf Inselbetrieb um.

Im Inselbetrieb werden die Steckdosen D1 bis Dn über die zugeordneten Auswerte- und Steuervorrichtungen AE1 bis AEn in Abhängigkeit von voreingestellten Kriterien zu- oder abschaltet.

Elektrische Geräte sind im Allgemeinen so konstruiert, dass sie in einem definierten Spannungsbereich und einem definierten Frequenzbereich um den jeweiligen Sollwert herum ordnungsgemäß funktionieren. Haushaltsgeräte dürfen zum Beispiel mit Spannungen betrieben werden, die im Bereich von -15% bis +10% des Sollwerts liegen. Für den Frequenzbereich gelten zum Beispiel Werte von -10% bis +10% des Sollwerts.

Die moderne Digitaltechnik ermöglicht es, sowohl die Frequenz als auch die Spannung einer Stromversorgung mit Hilfe kostengünstiger Schaltungen sehr genau auf zum Beispiel 0,1% genau zu messen. Die erfindungsgemäße Stromversorgungsvorrichtung nutzt diese Toleranzbereiche von Spannung und Frequenz sowie die genaue Messbarkeit derselben sowohl in der Photovoltaikanlage P als auch an den Auswerte- und Steuervorrichtungen AE1 bis AEn. Die autarke Stromversorgung P kann durch ihre Regelung sehr genau auf einem gewünschten Wert von Spannung und Frequenz gehalten werden; die Auswerte- und Steuervorrichtungen AE1 bis AEn können die von der autarken Stromversorgung angebotene Spannung und Frequenz erfassen und im Inselbetrieb die jeweiligen Steckdosen D1 bis Dn in Abhängigkeit von den Messwerten zu- oder abschalten.

Die von der autarken Stromversorgung P ins Inselnetz gespeiste Spannung und deren Frequenz können zum Energiemanagement über verschiedene voreingestellte Kriterien gesteuert werden. Im einfachsten Fall werden sie nach einem zeitlich ablaufenden Programm bestimmt. Zum Beispiel ist ein Inselbetrieb nur für eine maximale vorbestimmte Zeitdauer vorgesehen; dies insbesondere für den Fall, dass die Photovoltaikanlage P die Speisung der Steckdosen D1 bis Dn allein aus ihrer Pufferbatterie 5 vornehmen muss.

Es ist aber auch möglich, das Energiemanagement über intelligente Kriterien zu steuern. Die autarke Stromversorgung P kann zum Beispiel die Kapazität ihrer Quelle 1, 5 messen und anhand des Messergebnisses entscheiden, welche der angeschlossenen elektrischen Verbraucher gespeist werden sollen. Spannung und Frequenz können durch die autarke Stromversorgung P entsprechend gesteuert werden. Dieses Verfahren bietet sich insbesondere bei Photovoltaikanlagen P mit und ohne Pufferbatterien 5 an, bei denen über den Tagesablauf je nach Sonneneinstrahlung oder in der Pufferbatterie vorhandener Ladung unterschiedliche Verbraucher zu- oder abgeschaltet werden.

Hierbei können auch unterschiedliche Prioritäten der angeschlossenen elektrischen Verbraucher berücksichtigt werden. In einem Haushalt ist zum Beispiel ein Gefriergerät ein vorrangig zu versorgender Verbraucher, damit die darin gelagerten Nahrungsmittel nicht verderben, während eine Waschmaschine auch ohne Schaden für längere Zeit ausgeschaltet bleiben kann.

Soll aus dem Inselbetrieb wieder in den Netzbetrieb zurückgewechselt werden, wenn zum Beispiel ein Netzausfall behoben worden ist, dann sendet der Wechselrichter 6 der Photovoltaikanlage P wieder ein spezielles Signal an die Auswerte- und Steuervorrichtungen AE1 bis AEn der Steckdosen D1 bis Dn in Form einer kurzzeitigen definierten Spannung und/oder Frequenz aus. Die Auswerte- und Steuervorrichtungen AE1 bis AEn schalten auf Normalbetrieb um und damit wieder alle Steckdosen D1 bis Dn ständig zu. Das spezielle Signal des Wechselrichters 6 zum Ende des Inselbetriebs kann sich in vorteilhafter Weise von dem zum Beginn des Inselbetriebs unterscheiden, ohne dass die Erfindung hierauf beschränkt sein soll.

Während des Inselbetriebs kann durch die Stromversorgungsvorrichtung ohne zusätzliche Kabel- oder Funkverbindungen eine gewünschte Auswahl der angeschlossenen elektrischen Verbraucher getroffen werden. Das System hat eine besonders große Störsicherheit, da die mit Leistung gelieferte Versorgungsspannung und Frequenz selbst zur Informationsübermittlung der speziellen Signale von der autarken Stromversorgung P an die Auswerte- und Steuervorrichtungen AE1 bis AEn genutzt wird.

## Patentansprüche

1. Stromversorgungsvorrichtung, mit
- wenigstens einem Stromverbraucheranschluss (D1 ... Dn), an den ein elektrischer Verbraucher angeschlossen werden kann;
- wenigstens einer Auswerte- und Steuervorrichtung (AE1 ... AEn)
- einem ersten Stromversorgungsanschluss, der mit einer allgemeinen Stromversorgung (N) verbindbar ist;
- einer autarken Stromversorgung (P);
- einem zweiten Stromversorgungsanschluss, der mit der autarken Stromversorgung (P) verbunden ist; und
- einer Umschaltvorrichtung (2) zum Schalten der Verbindung des wenigstens eines Stromverbraucheranschlusses mit dem ersten Stromversorgungsanschluss, Netzbetrieb, oder dem zweiten Stromversorgungsanschluss, Inselbetrieb,
wobei dem wenigstens einen Stromverbraucheranschluss (D1 ... Dn) die wenigstens eine Auswerte- und Steuervorrichtung (AE1 ... AEn) zugeordnet ist, die derart ausgebildet ist, dass sie den Inselbetrieb der Stromversorgungsvorrichtung erkennt und den wenigstens einen Stromverbraucheranschluss (D1 ... Dn) zumindest im Inselbetrieb in Abhängigkeit von voreingestellten Kriterien zu- oder abschaltet,
**dadurch gekennzeichnet,**
**dass** die autarke Stromversorgung (P) eine Photovoltaikanlage ist und derart ausgebildet ist, dass sie ihre Speisespannung und/oder die Frequenz ihrer Speisespannung im Inselbetrieb verändern kann, um das Energiemanagement im Inselbetrieb zu verbessern.

2. Stromversorgungsvorrichtung nach Anspruch 1,
**dadurch gekennzeichnet,**
**dass** die voreingestellten Kriterien eine oder mehrere der folgenden Größen enthalten:
dem Stromverbraucheranschluss (D1 ... Dn) angebotene Spannung, dem Stromverbraucheranschluss (D1 ... Dn) angebotene Frequenz, Zeit seit Beginn des Inselbetriebs, Priorität eines an den Stromverbraucheranschluss (D1 ... Dn) angeschlossenen elektrischen Verbrauchers.

3. Stromversorgungsvorrichtung nach Anspruch 1 oder 2,
**dadurch gekennzeichnet,**
**dass** mehrere Stromverbraucheranschlüsse (D1 ... Dn) vorgesehen sind und für jeden der mehreren Stromverbraucheranschlüsse eigene voreingestellte Kriterien vorgesehen sind.

4. Stromversorgungsvorrichtung nach einem der Ansprüche 1 bis 3,
**dadurch gekennzeichnet,**
**dass** mehrere Stromverbraucheranschlüsse (D1 ... Dn) vorgesehen sind und jedem der mehreren Stromverbraucheranschlüsse eine eigene Auswerte- und Steuervorrichtung (AE1 ... AEn) zugeordnet ist.

5. Stromversorgungsvorrichtung nach einem der Ansprüche 1 bis 4,
**dadurch gekennzeichnet,**
**dass** die autarke Stromversorgung (P) derart ausgebildet ist, dass sie zum Start und/oder zum Ende des Inselbetriebs ein spezielles Signal, in Form einer kurzzeitige Abweichung der dem wenigstens einen Stromverbraucheranschluss angebotenen Spannung und/oder Frequenz, an die wenigstens eine Auswerte- und Steuervorrichtung (AE1 ... AEn) sendet; und
**dass** die wenigstens eine Auswerte- und Steuervorrichtung (AE1 ... AEn) derart ausgebildet ist, dass sie den Inselbetrieb der Stromversorgungsvorrichtung anhand des von der autarken Stromversorgung (P) gesendeten speziellen Signals erkennt.

6. Stromversorgungsvorrichtung nach einem der Ansprüche 1 bis 5,
**dadurch gekennzeichnet,**
**dass** die autarke Stromversorgung (P) derart ausgebildet ist, dass ihre Speisespannung im Bereich von -15% bis +10% eines Sollwerts veränderbar ist.

7. Stromversorgungsvorrichtung nach einem der Ansprüche 1 bis 6,
**dadurch gekennzeichnet,**
**dass** die Frequenz ihrer Speisespannung im Bereich von -10% bis +10% eines Sollwerts veränderbar ist.

8. Stromversorgungsvorrichtung nach einem der Ansprüche 1 bis 7,
**dadurch gekennzeichnet,**
**dass** die wenigstens eine Auswerte- und Steuervorrichtung (AE1 ... AEn) derart ausgebildet ist, dass sie den wenigstens einen Stromverbraucheranschluss (D1 ... Dn) während des Netzbetriebs ständig zuschaltet.

## Claims

1. A power supply device, with
- at least one power consumer terminal (D1 ... Dn), to which an electrical consumer can be connected;
- at least one evaluation and control device (AE1 ... AEn);
- a first power supply terminal which can be connected to a mains power supply (N);
- a stand-alone power supply (P);
- a second power supply terminal connectable to the stand-alone power supply (P); and
- a switching device (2) for switching the connection of the at least one power consumer terminal to the first power supply terminal, mains operation, or the second power supply terminal, island operation,
wherein the at least one evaluation and control device (AE1 ... AEn) is assigned to the at least one power consumer terminal (D1 ... Dn) and is configured in such a way that it detects the island operation of the power supply device and connects or disconnects the at least one power consumer terminal (D1 ... Dn) at least in the island operation in dependence of preset criteria,
**characterized in**
**that** the stand-alone power supply (P) is a photovoltaic system and is configured in such a way that it can change its supply voltage and/or the frequency of its supply voltage in the island operation for improving energy management in the island operation.

2. The power supply device according to claim 1, **characterized in that** the preset criteria include one or more of the following quantities:
voltage offered to the power consumer terminal (D1 ... Dn), frequency offered to the power consumer terminal (D1 ... Dn), time since the start of island operation, priority of an electrical consumer connected to the power consumer terminal (D1 ... Dn).

3. The power supply device according to claim 1 or 2, **characterized in that** a plurality of power consumer terminals (D1 ... Dn) are provided and for each of said plurality of power consumer terminals own preset criteria are provided.

4. The power supply device according to any one of claims 1 to 3, **characterized in that** a plurality of power consumer terminals (D1 ... Dn) are provided and an individual evaluation and control device (AE1 ... AEn) is assigned to each of the plurality of power consumer terminals.

5. The power supply device according to any one of claims 1 to 4, **characterized in that** the stand-alone power supply (P) is configured in such a way that, at the start and/or at the end of the island operation, it transmits a special signal to the at least one evaluation and control device (AE1 ... AEn), in the form of a short-term deviation of the voltage and/or frequency offered to the at least one power consumer terminal; and
**in that** the at least one evaluation and control device (AE1 ... AEn) is configured in such a way that it detects the island operation of the power supply device on the basis of the special signal transmitted by the stand-alone power supply (P).

6. The power supply device according to any one of claims 1 to 5, **characterized in that** the stand-alone power supply (P) is configured in such a way that its supply voltage can be varied in the range from -15% to +10% of a setpoint value.

7. The power supply device according to any one of claims 1 to 6, **characterized in that** the frequency of its supply voltage can be varied in the range from -10% to +10% of a setpoint value.

8. The power supply device according to any one of claims 1 to 7, **characterized in that** the at least one evaluation and control device (AE1 ... AEn) is configured in such a way that it permanently connects the at least one power consumer terminal (D1 ... Dn) during mains operation.

## Revendications

1. Dispositif d'alimentation électrique, ayant
- au moins une borne de consommateur d'électricité (D1 ... Dn), à laquelle un consommateur électrique peut être connecté ;
- au moins un dispositif d'évaluation et de commande (AE1 ... AEn) ;
- une première borne d'alimentation électrique pouvant être connectée à une alimentation générale (N) ;
- une alimentation électrique autonome (P) ;
- une deuxième borne d'alimentation électrique connectée à l'alimentation électrique autonome (P) ; et
- un dispositif de commutation (2) pour commuter la connexion d'au moins une borne de consommateur d'électricité à la première borne d'alimentation, fonctionnement du réseau, ou à la deuxième borne d'alimentation, fonctionnement en site isolé,
l'au moins un dispositif d'évaluation et de commande (AE1 ... AEn) étant associé à l'au moins une borne de consommateur d'électricité (D1 ... Dn), lequel dispositif d'évaluation et de commande (AE1 ... AEn) est conçu de telle sorte qu'il détecte le fonctionnement en site isolé du dispositif d'alimentation électrique et connecte ou déconnecte l'au moins une borne de consommateur d'électricité (D1 ... Dn) au moins en fonctionnement en site isolé en fonction de critères prédéfinis,
**caractérisé en ce que**,
l'alimentation électrique autonome (P) est un système photovoltaïque et est conçue de telle sorte qu'elle peut modifier sa tension d'alimentation et/ou la fréquence de sa tension d'alimentation en fonctionnement en site isolé afin d'améliorer la gestion de l'énergie en fonctionnement en site isolé.

2. Dispositif d'alimentation électrique selon la revendication 1,
**caractérisé en ce que**
les critères prédéfinis comprennent une ou plusieurs des quantités suivantes : tension offerte à la borne de consommateur d'électricité (D1 ... Dn), fréquence offerte à la borne de consommateur d'électricité (D1 ... Dn), temps depuis le début du fonctionnement en site isolé, priorité d'un consommateur électrique connecté à la borne de consommateur d'électricité (D1 ... Dn).

3. Dispositif d'alimentation électrique selon la revendication 1 ou 2,
**caractérisé en ce que**
la pluralité de bornes (D1 ... Dn) sont fournies et des critères individuels préétablis sont prévus pour chacune de la pluralité de bornes consommateurs d'électricité.

4. Dispositif d'alimentation électrique selon l'une des revendications 1 à 3,
**caractérisé en ce que**
la pluralité de bornes de consommateur d'électricité (D1 ... Dn) sont prévues et que chacune de la pluralité de bornes de consommateur d'électricité se voit attribuer son propre dispositif d'évaluation et de commande (AE1 ... AEn).

5. Dispositif d'alimentation électrique selon l'une des revendications 1 à 4,
**caractérisé en ce que**
l'alimentation électrique autonome (P) est conçue de telle sorte qu'au début et/ou à la fin du fonctionnement en site isolé, elle envoie un signal spécifique, sous la forme d'une déviation de courte durée de la tension et/ou de la fréquence offerte à au moins une borne consommateur d'électricité, à au moins un dispositif d'évaluation et de commande (AE1 ... AEn) ; et **en ce que** le ou les appareils d'évaluation et de commande (AE1 ... AEn) sont conçus de telle sorte qu'ils détectent le fonctionnement en site isolé du dispositif d'alimentation électrique sur la base du signal spécial transmis par l'alimentation électrique autonome (P).

6. Dispositif d'alimentation électrique selon l'une des revendications 1 à 5,
**caractérisé en ce que**
l'alimentation électrique autonome (P) est conçue de telle sorte que sa tension d'alimentation puisse varier dans une plage de -15 % à +10 % d'une valeur de consigne.

7. Dispositif d'alimentation électrique selon l'une des revendications 1 à 6,
**caractérisé en ce que**
la fréquence de sa tension d'alimentation est variable dans une plage de -10% à +10% d'une valeur de consigne.

8. Dispositif d'alimentation électrique selon l'une des revendications 1 à 7,
**caractérisé en ce que**
l'appareil d'évaluation et de commande (AE1 ... AEn) est conçu de telle sorte qu'il relie en permanence au moins une borne de consommateur d'électricité (D1 ... Dn) pendant le fonctionnement du réseau.
